(19) Europäisches Patentamt
European Patent Office
Office européen des brevets

(11) **EP 4 431 255 A1**

(12) **EUROPEAN PATENT APPLICATION**
published in accordance with Art. 153(4) EPC

(43) Date of publication:
**18.09.2024 Bulletin 2024/38**

(21) Application number: **22967433.8**

(22) Date of filing: **16.12.2022**

(51) International Patent Classification (IPC):
**B28B 3/02** (2006.01)      **B82Y 99/00** (2011.01)
**A61C 13/083** (2006.01)      **C04B 35/486** (2006.01)

(52) Cooperative Patent Classification (CPC):
**A61C 13/083; B28B 3/02; C04B 35/486;**
**B82Y 99/00**

(86) International application number:
**PCT/JP2022/046462**

(87) International publication number:
**WO 2024/127646 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kuraray Noritake Dental Inc.**
**Kurashiki-shi**
**Okayama 710-0801 (JP)**

(72) Inventors:
• **SAKAMOTO Hiroyuki**
  **Miyoshi-shi, Aichi 4700293 (JP)**
• **MATSUMOTO Atsushi**
  **Miyoshi-shi, Aichi 4700293 (JP)**
• **ISHINO Hiroshige**
  **Miyoshi-shi, Aichi 4700293 (JP)**

(74) Representative: **D Young & Co LLP**
**3 Noble Street**
**London EC2V 7BQ (GB)**

(54) **OXIDE-CERAMIC MOLDED BODY MANUFACTURING METHOD**

(57)    The present invention provides a method for manufacturing an oxide ceramic molded body that enables high-yield production of a molded body in a convenient fashion using a powder of oxide ceramic particles having a nano-sized average primary particle diameter (particularly, 120 nm or less). The present invention relates to a method for manufacturing an oxide ceramic molded body, comprising subjecting a powder containing oxide ceramic particles with an average primary particle diameter of 1 to 120 nm to press molding under reduced pressure. Preferably, the press molding is conducted under a reduced pressure of 0.1 to 100 kPa.

**Description**

TECHNICAL FIELD

The present invention relates to a method for manufacturing an oxide ceramic molded body, among others.

BACKGROUND ART

Oxide ceramics find widespread applications in industry. Over the last years, zirconia sintered bodies, in particular, have been used in dental material applications such as dental prostheses. In many cases, such dental prostheses are produced from a zirconia molded body of a desired shape, such as a disc or a prism, prepared by, for example, press molding zirconia particles or molding a composition containing zirconia particles. The zirconia molded body is then pre-sintered to provide a pre-sintered body (mill blank), which is subsequently sintered after being cut (milled) into a shape of the desired dental prosthesis.

There are situations where high translucency and high strength are required for zirconia sintered bodies. Methods are available that address this issue, as proposed in Patent Literatures 1 and 2, for example.

Patent Literature 1 discloses a method for producing a zirconia molded body, providing a convenient way to produce a zirconia sintered body in high yield while offering superior quality with both high translucency and high strength.

Specifically, Patent Literature 1 discloses a zirconia molded body manufacturing method comprising the steps of moistening a zirconia particle-containing pre-wetted molded body to form a wetted molded body, and pressing the wetted molded body. It is stated in the disclosure that the zirconia particles have an average primary particle diameter of preferably 30 nm or less, and that the pre-wetted molded body is preferably one obtained by press molding a powder containing zirconia particles. It is also stated that the powder containing zirconia particles is preferably one resulting from drying a slurry containing zirconia particles.

Patent Literature 2 discloses nanocrystalline zirconia and a processing method thereof.

Specifically, a dental zirconia ceramic is disclosed that shows opalescence, and possesses a particle diameter ranging from 10 nm to 300 nm, a density at least 99.5% of theoretical density, a 45% or higher visible light transmittance at 560 nm, and a strength measuring at least 800 MPa. The dental zirconia ceramic is fabricated by a method that comprises the steps of providing a zirconia green blank containing zirconia nanoparticles with an average particle diameter of less than 20 nm; molding the zirconia green blank by CAD/CAM, low-pressure injection molding (LPIM), or heat pressing, or forming a brown blank by heating the zirconia green blank, and molding the brown blank through CAD/CAM machining; and sintering the molded zirconia green blank or brown blank at 1,200°C or lower temperatures to provide an opalescent sintered zirconia body.

Patent Literature 2 also discloses a method for producing an opalescent dental zirconia product, and the process of forming a blank or a dental product from the suspension includes centrifugal casting, drop casting, gel casting, injection molding, slip casting, pressure filtration, and/or electrophoretic deposition (EPD).

CITATION LIST

Patent Literature

    Patent Literature 1: JP 2020-1973 A
    Patent Literature 2: JP 2019-5627 A

SUMMARY OF INVENTION

Technical Problem

In Patent Literature 1, however, the objective is to reduce chipping or cracking in the final zirconia sintered body. This is achieved through the use of a molded body resulting from pressing of a wetted molded body created by moistening a pre-wetted molded body obtained through press molding of a powder, and no consideration is given to the production yield of the pre-wetted molded body.

In the method of Patent Literature 1 involving press molding of a powder, difficulties occasionally arise when attempting to create a press-molded body by molding a powder with nano-sized particles (120 nm or less) having a small average primary particle diameter, due to the increased specific surface area. The present inventors have found that, while molding is possible with Patent Literature 1, complications arise when it employs uniaxial pressing. For example, the presence of remaining air inside the press-molded body causes chipping or cracking in the press-molded body upon removal from the mold, resulting in the inability to create a press-molded body in high yield.

Another finding by the present inventors is that, despite visual external indications of a successful formation of a molded body, a minor presence of remaining air inside the molded body has a negative impact on yield in subsequent pre-sintered body production, such as by causing cracking in the molded body during pre-sintering. It was also found that the method of producing a zirconia molded body through a pressing process such as cold isostatic pressing (CIP) rather than uniaxial pressing involves difficulty in removing air when a powder with small particle diameters is used, leading to molded bodies with diminished quality and lower production yields.

The centrifugal casting technique described in Patent Literature 2, applied to slurries of a powder with nano-sized particle diameters, involves poor separation of the powder (solid) from the liquid owning to the large specific surface area of the nanoparticles, requiring an extensive duration and rendering it unsuitable for industrial production.

Additionally, employing the gel casting technique often causes particles to obstruct the filter when the particle size is small, leading to prolonged separation times from the liquid and frequent filter replacements to address clogging, rendering the method highly inefficient from an industrial perspective.

Moreover, Patent Literature 2 gives no consideration to the production yield of the molded body (green body).

Patent Literatures 1 and 2 do not take into account the production yield when molding a powder of oxide ceramic particles with a nano-sized average primary particle diameter (particularly, 120 nm or less). However, because of the excessively small particle size, molding an oxide ceramic powder with an average primary particle diameter of 120 nm or less poses issues such as chipping or cracking in the molded body due to the remaining air inside the molded body, as noted above. It was also observed that cracking can occur during pre-sintering due to the influence of a minor presence of remaining air inside the molded body, even when it appears to have been properly formed with no apparent visual flaw. The issue was notably pronounced in the production of molded bodies with a thickness of 10 mm or more.

It is accordingly an object of the present invention to provide a method for manufacturing an oxide ceramic molded body that enables high-yield production of a molded body using a powder of oxide ceramic particles having a nano-sized average primary particle diameter (particularly, 120 nm or less).

Solution to Problem

The present inventors conducted intensive studies to find a solution to the foregoing issues, and found that chipping or cracking in molded bodies can be greatly reduced when a powder with a small average primary particle diameter is pressed under reduced pressure in press molding the powder with a press molding machine. This led to the completion of the present invention after further examinations.

Specifically, the present invention includes the following.

[1] A method for manufacturing an oxide ceramic molded body, comprising subjecting a powder containing oxide ceramic particles with an average primary particle diameter of 1 to 120 nm to press molding under reduced pressure.

[2] The method for manufacturing an oxide ceramic molded body according to [1], wherein the press molding is conducted under a reduced pressure of 0.1 kPa or more and 100 kPa or less.

[3] The method for manufacturing an oxide ceramic molded body according to [1] or [2], wherein the press molding involves a loading pressure of 10 MPa or more and 200 MPa or less.

[4] The method for manufacturing an oxide ceramic molded body according to any one of [1] to [3], wherein the powder containing oxide ceramic particles is a powder containing zirconia particles, and/or a powder containing alumina particles.

[5] The method for manufacturing an oxide ceramic molded body according to [4], wherein the powder containing oxide ceramic particles additionally contains a stabilizing agent capable of preventing a phase transformation of zirconia.

[6] The method for manufacturing an oxide ceramic molded body according to [5], wherein:

the powder containing oxide ceramic particles is a powder containing zirconia particles, and
the stabilizing agent is yttria.

[7] The method for manufacturing an oxide ceramic molded body according to [6], wherein the content of the yttria is 2.0 mol% or more and 9.0 mol% or less with respect to a total number of moles of the zirconia and the yttria.

[8] A method for manufacturing an oxide ceramic pre-sintered body, comprising pre-sintering a molded body obtained by the method of any one of [1] to [7].

[9] The method for manufacturing an oxide ceramic pre-sintered body according to [8], wherein the pre-sintering involves a temperature of 300°C or more and less than 1,100°C.

[10] The method for manufacturing an oxide ceramic pre-sintered body according to [8] or [9], wherein the oxide ceramic molded body is a zirconia molded body or an alumina molded body.

[11] A method for manufacturing an oxide ceramic sintered body, comprising sintering an oxide ceramic molded body obtained by the method of any one of [1] to [7], or an oxide ceramic pre-sintered body obtained by the method of any one of [8] to [10].

[12] The method for manufacturing an oxide ceramic sintered body according to [11], wherein the sintering involves a temperature of 900°C or more and 1,500°C or less.

Advantageous Effects of Invention

According to the present invention, a method for manufacturing an oxide ceramic molded body can be provided that enables high-yield production of a molded body using a powder of oxide ceramic particles having a nano-sized average primary particle diameter (particularly, 120 nm or less).

According to the present invention, a method for manufacturing an oxide ceramic molded body can be provided that molds particles having a nano-sized average primary particle diameter (particularly, 120 nm or less) under reduced pressure in press molding the particles with a press molding machine, reducing the remaining air in the press-molded body and improving the yield of the press molding process itself.

According to the present invention, a method for manufacturing an oxide ceramic molded body can be provided that offers a convenient way to enable high-yield production of a molded body with a powder of oxide ceramic particles having a nano-sized average primary particle diameter, without requiring specialized equipment or complicated processes.

The methods produce an oxide ceramic molded body that experiences reduced chipping or cracking during the pre-sintering and sintering processes, enabling easy production of a pre-sintered body (semi-sintered body) or sintered body with a thickness of 10 mm or more. Furthermore, the sintered body exhibits fewer microvoid formations, enhancing translucency.

Particularly, when using zirconia particles, the present invention enables easy production of a zirconia molded body and zirconia pre-sintered body in high yield, providing a convenient way for high-yield production of zirconia sintered bodies having excellent translucency and strength.

DESCRIPTION OF EMBODIMENTS

The following describes embodiments of the present invention. It is to be noted that the descriptions below do not limit the present invention.

[Oxide Ceramic Molded Body Manufacturing Method]

A method for manufacturing an oxide ceramic molded body of the present invention comprises subjecting a powder containing oxide ceramic particles with an average primary particle diameter of 1 to 120 nm to press molding under reduced pressure.

In the present invention, "oxide ceramic molded body" means a molded body of oxide ceramic, and refers to a state where oxide ceramic particles have not formed necks.

· Oxide Ceramic Particles

The oxide ceramic particles used in the present invention are not particularly limited, and include those containing, for example, zirconia, alumina, titania, silica, niobium oxide, tantalum oxide, and yttria. The oxide ceramics may be used alone, or two or more thereof may be used in combination. For applicability to dental uses such as dental prostheses, the oxide ceramics are preferably those containing zirconia and/or alumina, more preferably those containing zirconia, even more preferably those containing zirconia as a main component.

The following describes embodiments where oxide ceramic particles contain zirconia as a main component, while also discussing situations where the oxide ceramic is alumina, as needed.

· Zirconia Particles

The zirconia particles used in the present invention are preferably those containing zirconia as a main component. Here, "main component" refers to 50 mass% or more. The zirconia content in zirconia particles according to the present invention is preferably 60 mass% or more, more preferably 65 mass% or more, even more preferably 70 mass% or more, yet more preferably 75 mass% or more, particularly preferably 80 mass% or more, most preferably 85 mass% or more. The average primary particle diameter of zirconia particles is not particularly limited. However, for considerations such as providing a zirconia sintered body having even superior translucency and strength, and more notably enhancing the effectiveness of the present invention, the average primary particle diameter of zirconia particles is preferably 90 nm or less, more preferably 70 nm or less, even more preferably 30 nm or less. For considerations such as providing a zirconia sintered body having even superior translucency and strength, and more notably enhancing the effectiveness of the present invention, the average primary particle diameter of zirconia particles is preferably 1 nm or more, more preferably 5 nm or more, even more preferably 10 nm or more.

The average primary particle diameter of zirconia particles can be measured, for example, as a mean value (number-based, arithmetic average diameter) of particle size measurements (maximum diameter) of arbitrarily selected 100 particles in an image of zirconia particles (primary particles) captured with a transmission electron microscope (TEM). The transmission electron microscope (TEM) may be a commercially available product.

Another certain embodiment is, for example, an oxide ceramic molded body manufacturing method that comprises subjecting a powder containing oxide ceramic particles with an average primary particle diameter of 1 to 120 nm to press molding under reduced pressure, and in which the powder containing oxide ceramic particles is a powder containing alumina particles.

In an oxide ceramic molded body manufacturing method of the present invention, the powder is preferably one containing alumina as a main component when using a powder containing alumina. The term "main component" is as described for zirconia particles. The alumina content in alumina particles according to the present invention is 50 mass% or more. The alumina content in alumina particles according to the present invention is preferably 60 mass% or more, more preferably 65 mass% or more, even more preferably 70 mass% or more, yet more preferably 75 mass% or more, particularly preferably 80 mass% or more, most preferably 85 mass% or more.

The average primary particle diameter of alumina particles is not particularly limited. However, for considerations such as providing an alumina sintered body having even superior translucency and strength, and more notably enhancing the effectiveness of the present invention, the average primary particle diameter of alumina particles is preferably 115 nm or less, more preferably 110 nm or less, even more preferably 100 nm or less. For considerations such as providing an alumina sintered body having even superior translucency and strength, and more notably enhancing the effectiveness of the present invention, the average primary particle diameter of alumina particles is preferably 1 nm or more, more preferably 10 nm or more, even more preferably 40 nm or more.

Preferably, zirconia particles in the present invention comprise a stabilizing agent capable of preventing a phase transformation of zirconia (hereinafter, also referred to simply as "stabilizing agent"). Examples of the stabilizing agent include oxides such as yttrium oxide ($Y_2O_3$) (hereinafter, "yttria"), calcium oxide (CaO), magnesium oxide (MgO), cerium oxide ($CeO_2$) (hereinafter, "ceria"), scandium oxide ($Sc_2O_3$), niobium oxide ($Nb_2O_5$), lanthanum oxide ($La_2O_3$), erbium oxide ($Er_2O_3$), praseodymium oxide (PreOn, $Pr_2O_3$), samarium oxide ($Sm_2O_3$), europium oxide ($Eu_2O_3$), and thulium oxide ($Tm_2O_3$). Preferred is yttria. These may be used alone, or two or more thereof may be used in combination.

For considerations such as providing a zirconia sintered body having even superior translucency and strength, a certain embodiment is, for example, an oxide ceramic molded body manufacturing method in which the powder containing oxide ceramic particles is a powder containing zirconia particles, and the stabilizing agent is yttria.

The content of the stabilizing agent in the zirconia particles used may be the same as the content of the stabilizing agent in the zirconia pre-sintered body or zirconia sintered body to be produced. For considerations such as providing a zirconia sintered body having even superior translucency and strength, the content of the stabilizing agent in zirconia particles is preferably 2.0 mol% or more, more preferably 3.0 mol% or more, even more preferably 4.0 mol% or more, particularly preferably 4.5 mol% or more. The content may be 5.0 mol% or more, or 5.5 mol% or more. The content of the stabilizing agent in zirconia particles is preferably 9.0 mol% or less, more preferably 8.0 mol% or less, even more preferably 7.0 mol% or less. The content of the stabilizing agent in zirconia particles means the fraction (mol%) of the number of moles of yttria with respect to a total number of moles of zirconia and stabilizing agent.

The content of the stabilizing agent in zirconia particles can be measured using techniques, for example, such as inductively coupled plasma (ICP) emission spectral analysis or X-ray fluorescence analysis (XRF).

The content of the stabilizing agent in the zirconia molded body, zirconia pre-sintered body, and zirconia sintered body can be measured using the same method employed for the measurement of stabilizing agent content in zirconia particles.

The method of preparation of zirconia particles is not particularly limited, and may be selected from methods, for example, such as the breakdown process, which involves pulverizing coarse particles into a fine powder, and the building-up process, which involves synthesis from atoms or ions through nucleation and growth. The building-up process is preferred for obtaining fine zirconia particles in high purity.

The breakdown process may involve pulverization with a known pulverizer, for example, such as a ball mill or bead mill. Preferably, microsize pulverization media are used for pulverization. For example, it is preferable to use 100 $\mu$m or smaller pulverization media. Preferably, the pulverization is followed by classification.

Examples of the building-up process include:

the vapor-phase pyrolysis method, which involves the precipitation of oxides through pyrolysis of oxoacid salts of metal ions or organometallic compounds with high vapor pressures during vaporization;

the vapor-phase reaction method, where synthesis occurs through a vapor-phase chemical reaction between a gas of high-vapor-pressure metal compounds and a reactant gas;

the evaporative concentration method, which involves vaporizing the raw materials by heating and then condensing the vapor into fine particles through rapid cooling in an inert gas at a predetermined pressure;

the melt method, which involves cooling and solidifying the melt into small droplets to form a powder;

the solvent evaporation method, which evaporates the solvent to increase the concentration in the liquid to a supersaturated state to cause precipitation; and

the precipitation method, which involves supersaturating the solute concentration through a reaction with a precipitant or hydrolysis, and precipitating poorly soluble compounds such as oxides and hydroxides through nucleation and growth processes.

The precipitation method can be further divided into the following methods:

the homogenous precipitation method, which involves the formation of a precipitant in the solution through a chemical reaction to eliminate local non-uniformity in precipitant concentration;

the coprecipitation method, which involves adding a precipitant to cause simultaneous precipitation of multiple metal ions coexisting in the solution;

the hydrolysis method, which produces oxides or hydroxides through hydrolysis from alcohol solutions such as metal salt solutions, and metal alkoxides; and

the solvothermal synthesis method, which produces oxides or hydroxides from high-temperature and high-pressure fluids.

The solvothermal synthesis method is subdivided into methods such as the hydrothermal synthesis method that utilizes water as a solvent, and the supercritical synthesis method that employs a supercritical fluid, such as water or carbon dioxide, as a solvent.

In any of these building-up processes, it is preferable to accelerate the rate of precipitation to obtain finer zirconia particles. Preferably, the resulting zirconia particles are classified.

The zirconium source in the building-up processes may be, for example, nitrates, acetates, chlorides, or alkoxides. Specific examples of the zirconium source include zirconium oxychloride, zirconium acetate, and zirconyl nitrate.

In order to achieve the foregoing ranges for the content of the stabilizing agent contained in zirconia particles, the stabilizing agent may be incorporated during the production of zirconia particles. For example, the stabilizing agent may be dissolved in zirconia particles as a solid solution. The stabilizing agent is preferably yttria, as noted above. Examples of the yttrium source include nitrates, acetates, chlorides, and alkoxides. Specific examples include yttrium chloride, yttrium acetate, and yttrium nitrate.

Optionally, the zirconia particles may be surface-treated with a known surface treatment agent in advance. Examples of such surface treatment agents include organic compounds having an acidic group; fatty acid amides such as saturated fatty acid amides, unsaturated fatty acid amides, saturated fatty acid bisamides, and unsaturated fatty acid bisamides; and organometallic compounds such as silane coupling agents (organosilicon compounds), organotitanium compounds, organozirconium compounds, and organoaluminum compounds.

· Powder Containing Zirconia Particles

The method of preparation of a powder containing zirconia particles is not particularly limited. For example, powdery zirconia particles may be used without any modification, or a powder containing zirconia particles may be prepared by dry blending powdery zirconia and powdery optional components (for example, a fluorescent agent, a colorant, a translucency adjuster). For considerations such as enabling production of more uniform zirconia molded bodies with outstanding properties, and, in turn, zirconia pre-sintered bodies and zirconia sintered bodies possessing such desirable properties, it is preferable that a powder containing zirconia particles be obtained by drying a slurry containing zirconia particles.

(1) Slurry Containing Zirconia Particles

The method of preparation of a slurry containing zirconia particles is not particularly limited. For example, a slurry containing zirconia particles can be obtained by mixing zirconia particles and a dispersion medium. A slurry containing zirconia particles may be one obtained through the breakdown process or building-up process described above, or may be a commercially available product.

The zirconia particles may comprise a fluorescent agent. The fluorescent agent used is not particularly limited, and may be one or multiple fluorescent agents capable of emitting fluorescence at a given wavelength of light.

Examples of such fluorescent agents include those containing metallic elements.

Examples of the metallic elements include Ga, Bi, Ce, Nd, Sm, Eu, Gd, Tb, Dy, and Tm. The fluorescent agent may contain only one of these metallic elements, or two or more of these metallic elements. For considerations such as more notably enhancing the effectiveness of the present invention, preferred among these metallic elements are Ga, Bi, Eu, Gd, and Tm, more preferably Bi and Eu.

Examples of the fluorescent agent include oxides, hydroxides, acetates, and nitrates of the metallic elements above.

The fluorescent agent may be, for example, $Y_2SiO_5$:Ce, $Y_2SiO_5$:Tb, $(Y,Gd,Eu)BO_3$, $Y_2O_3$:Eu, YAG:Ce, $ZnGa_2O_4$:Zn, or $BaMgAl_{10}O_{17}$:Eu.

The content of the fluorescent agent is not particularly limited, and may be appropriately adjusted according to factors such as the type of fluorescent agent, and the intended use of the final zirconia sintered body. However, in view of considerations such as suitability of the final zirconia sintered body as a dental prosthesis, the content of fluorescent agent is preferably 0.001 mass% or more, more preferably 0.005 mass% or more, even more preferably 0.01 mass% or more with respect to the mass of the zirconia used, in terms of an oxide of a metallic element contained in the fluorescent agent.

The content of fluorescent agent is preferably 1 mass% or less, more preferably 0.5 mass% or less, even more preferably 0.1 mass% or less. When the content of fluorescent agent is at or above these lower limits, it is possible to provide a zirconia sintered body that exhibits fluorescence comparable to that of human natural teeth. When the content of fluorescent agent is at or below the foregoing upper limits, it is possible to reduce a decrease in translucency and strength in the zirconia sintered body.

By comprising a colorant, the zirconia sintered body becomes a colored zirconia sintered body. The colorant that may be contained in the slurry is not particularly limited, and may be a known pigment commonly used to color ceramics, or a known dental liquid colorant.

For example, the colorant may be one containing a metallic element. Specific examples include oxides, composite oxides, and salts containing metallic elements such as iron, vanadium, praseodymium, erbium, chromium, nickel, and manganese. It is also possible to use commercially available colorants.

Examples of commercially available colorant products include the Colour Liquid Prettau® manufactured by Zirkonzahn (Italy). The slurry may comprise one colorant, or two or more colorants.

The colorant content is not particularly limited, and may be appropriately adjusted according to factors such as the type of colorant, and intended use of the final zirconia sintered body. In view of considerations such as suitability of the final zirconia sintered body as a dental prosthesis, the colorant content is preferably 0.001 mass% or more, more preferably 0.005 mass% or more, even more preferably 0.01 mass% or more with respect to the mass of the zirconia used, in terms of an oxide of a metallic element contained in the colorant. The colorant content is preferably 5 mass% or less, more preferably 1 mass% or less, even more preferably 0.5 mass% or less. The colorant content may be 0.1 mass% or less, or 0.05 mass% or less.

The zirconia particles may comprise a translucency adjuster. Examples of the translucency adjuster include aluminum oxide, titanium oxide, silicon dioxide, zircon, lithium silicate, and lithium disilicate. The slurry may comprise one translucency adjuster, or two or more translucency adjusters.

The content of translucency adjuster is not particularly limited, and may be appropriately adjusted according to factors such as the type of translucency adjuster, and intended use of the final zirconia sintered body. In view of considerations such as suitability of the final zirconia sintered body as a dental prosthesis, the content of translucency adjuster is preferably 0.1 mass% or less with respect to the mass of the zirconia used.

(2) Powder Containing Zirconia Particles

For considerations such as enabling production of more uniform zirconia molded bodies with outstanding properties, and, in turn, zirconia pre-sintered bodies and zirconia sintered bodies possessing such desirable properties, it is preferable that a powder containing zirconia particles be obtained by drying a slurry containing zirconia particles, as noted above. The slurry to be subjected to drying may comprise at least one of a fluorescent agent, a colorant, and a translucency adjuster, as noted above.

When the slurry to be subjected to drying contains a fluorescent agent, the fluorescent agent may be incorporated by using any method, for example, by adding a powdery fluorescent agent. However, when preparing a slurry containing zirconia particles and a fluorescent agent, it is preferable to mix a zirconia particle-containing slurry and a liquid-state fluorescent agent because it enables the production of a zirconia sintered body having even superior translucency and strength by preventing the inclusion of coarse particles, despite the presence of a fluorescent agent. The liquid-state fluorescent agent may be, for example, a solution or dispersion of a fluorescent agent, preferably a solution of a fluorescent agent. The solution is not particularly limited, and may be, for example, an aqueous solution. The aqueous solution may be, for example, a dilute nitric acid solution, or a dilute hydrochloric acid solution, and may be appropriately selected according to the type of the fluorescent agent used, for example.

When the slurry to be subjected to drying contains a colorant and/or a translucency adjuster, the colorant and/or translucency adjuster may be incorporated by using any method, for example, by adding a powdery colorant and/or translucency adjuster to a slurry containing zirconia particles. It is, however, preferable that the colorant and/or translucency adjuster be mixed with a zirconia particle-containing slurry in the form of a solution or dispersion.

The method for drying a slurry containing zirconia particles is not particularly limited, and may be, for example, atomization drying (spray drying), supercritical drying, freeze drying, hot-air drying, filtration drying, or vacuum drying. For considerations such as the capability to inhibit particle aggregation during drying and provide a denser zirconia sintered body that exhibits even superior translucency and strength, the preferred method is any one of atomization drying, supercritical drying, and freeze drying, more preferably atomization drying or supercritical drying, even more preferably atomization drying.

The zirconia particle-containing slurry to be subjected to drying may be a slurry containing water as a dispersion medium. However, for considerations such as the capability to inhibit particle aggregation during drying and provide a denser zirconia sintered body, the slurry is preferably one containing a dispersion medium other than water, such as organic solvents.

Examples of the organic solvents include:

alcohols such as methanol, ethanol, 1-propanol, 2-propanol, 1-butanol, 2-butanol, tert-butyl alcohol, 2-methoxyethanol, 2-ethoxyethanol, 2-(2-ethoxyethoxy)ethanol, diethylene glycol monobutyl ether, and glycerin;
ketones such as acetone, and methyl ethyl ketone;
ethers such as tetrahydrofuran, diethyl ether, diisopropyl ether, 1,4-dioxane, and dimethoxyethane (including modified ethers such as propylene glycol monomethyl ether acetate (commonly known as PGMEA), preferably ether-modified ethers and/or ester-modified ethers, more preferably ether-modified alkylene glycols and/or ester-modified alkylene glycols);
esters such as ethyl acetate, and butyl acetate;
hydrocarbons such as hexane and toluene; and
halogenated hydrocarbons such as chloroform, and carbon tetrachloride.

These organic solvents may be used alone, or two or more thereof may be used in combination. Considering both body safety and ease of removal, the organic solvent is preferably a water-soluble organic solvent. Specifically, the organic solvent is more preferably ethanol, 2-propanol, tert-butyl alcohol, 2-ethoxyethanol, 2-(2-ethoxyethoxy)ethanol, propylene glycol monomethyl ether acetate, acetone, or tetrahydrofuran.

In certain situations, particularly where atomization drying is employed, it is preferable that the dispersion medium of the zirconia particle-containing slurry to be subjected to drying contain a liquid with a surface tension at 25°C of 50 mN/m or less because it enables the mitigation of particle aggregation during drying, and the production of a denser zirconia sintered body that exhibits even superior translucency and strength. In view of these considerations, the liquid has a surface tension of preferably 40 mN/m or less, more preferably 30 mN/m or less.

The surface tension at 25°C may have values presented in, for example, Handbook of Chemistry and Physics. For liquids that are not described in this handbook, the values presented in WO2014/126034 may be used. For liquids that are not described in either of these publications, the surface tension can be determined following a known measurement method, for example, such as the ring method or the Wilhelmy method. Preferably, the surface tension at 25°C is measured with the automatic surface tensiometer CBVP-Z manufactured by Kyowa Interface Science Co., Ltd., or SIGMA 702 manufactured by Biolin Scientific (Sweden).

The liquid may be an organic solvent having the foregoing ranges of surface tensions.

The organic solvent may be any of the aforementioned organic solvents with the foregoing ranges of surface tensions. However, for considerations such as the capability to inhibit particle aggregation during drying and provide a denser zirconia sintered body, the organic solvent is preferably at least one selected from the group consisting of methanol, ethanol, 2-methoxyethanol, 1,4-dioxane, 2-ethoxyethanol, and 2-(2-ethoxyethoxy)ethanol, more preferably at least one selected from the group consisting of methanol, ethanol, 2-ethoxyethanol, and 2-(2-ethoxyethoxy)ethanol.

For considerations such as the capability to inhibit particle aggregation during drying and provide a denser zirconia sintered body, the liquid content in the dispersion medium is preferably 50 mass% or more, more preferably 80 mass% or more, even more preferably 95 mass% or more, particularly preferably 99 mass% or more.

A slurry employing a dispersion medium other than water can be obtained by replacing the dispersion medium of a slurry dispersed in water. The method used to replace the dispersion medium is not particularly limited, and may be, for example, a method that removes water by distillation after adding a dispersion medium other than water (e.g., an organic solvent) to a slurry dispersed in water. For removal of water by distillation, the dispersion medium other than water may be distilled away with water, either partially or entirely. The addition of a dispersion medium other than water, and the removal of water by distillation may be repeated multiple times. As an alternative method, the dispersoid may be precipitated after adding a dispersion medium other than water to a slurry dispersed in water. Alternatively, the dispersion medium after replacement with a specific organic solvent in a slurry dispersed in water may be replaced with yet another organic solvent.

When the zirconia particle-containing slurry to be subjected to drying contains a fluorescent agent, the fluorescent agent may be added after replacing the dispersion medium. However, for considerations such as enabling production of more uniform zirconia sintered bodies having even superior properties, it is preferable to add the fluorescent agent before replacing the dispersion medium. Similarly, when the zirconia particle-containing slurry to be subjected to drying contains a colorant and/or a translucency adjuster, the colorant and/or translucency adjuster may be added after replacing the dispersion medium. However, for considerations such as enabling production of more uniform zirconia sintered bodies having even superior properties, it is preferable to add the colorant and/or translucency adjuster before replacing the dispersion medium.

The zirconia particle-containing slurry to be subjected to drying may be one that has undergone a dispersion process under heat and pressure, such as a reflux process or hydrothermal treatment. The zirconia particle-containing slurry to be subjected to drying may be one that has undergone a mechanical dispersion process with, for example, a roll mill, a colloid mill, a high-pressure jet disperser, an ultrasonic disperser, a vibration mill, a planetary mill, or a bead mill. The slurry may be subjected to only one of these processes, or two or more of these processes.

The zirconia particle-containing slurry to be subjected to drying may comprise one additional component or two or more additional components such as a binder, a plasticizer, a dispersant, an emulsifier, an antifoaming agent, a pH adjuster, and a lubricant. By containing these components (particularly, a binder, a dispersant, or an antifoaming agent, for example), it may be possible to inhibit particle aggregation during drying, and obtain a denser zirconia sintered body.

Examples of the binder include polyvinyl alcohol, methyl cellulose, carboxymethyl cellulose, acrylic binders, wax binders, polyvinyl butyral, polymethyl methacrylate, and ethyl cellulose.

Examples of the plasticizer include polyethylene glycol, glycerin, propylene glycol, and dibutyl phthalic acid.

Examples of the dispersant include ammonium polycarboxylates (e.g., triammonium citrate), ammonium polyacrylate, acrylic copolymer resins, acrylic acid ester copolymers, polyacrylic acid, bentonite, carboxymethyl cellulose, anionic surfactants (for example, polyoxyethylene alkyl ether phosphates such as polyoxyethylene lauryl ether phosphate), non-ionic surfactants, oleic glyceride, amine surfactants, and oligosaccharide alcohols.

Examples of the emulsifier include alkyl ethers, phenyl ethers, sorbitan derivatives, and ammonium salts.

Examples of the antifoaming agent include alcohols, polyethers, polyethylene glycol, silicone, and waxes.

Examples of the pH adjuster include ammonia, ammonium salts (including ammonium hydroxides such as tetramethylammonium hydroxide), alkali metal salts, and alkali-earth metal salts.

Examples of the lubricant include polyoxyethylene alkylate ethers, and waxes.

For considerations such as the capability to inhibit particle aggregation during drying and provide a denser zirconia sintered body, the water content in the zirconia particle-containing slurry to be subjected to drying is preferably 3 mass% or less, more preferably 1 mass% or less, even more preferably 0.1 mass% or less. The water content can be measured with a Karl Fischer aquameter.

The drying conditions in the foregoing drying methods are not particularly limited, and known drying conditions may be appropriately adopted. When using an organic solvent as a dispersion medium, it is preferable that drying be performed in the presence of a nonflammable gas, more preferably nitrogen, in order to reduce the risk of explosion during drying.

In the case of supercritical drying, the supercritical fluid is not particularly limited, and may be, for example, water or carbon dioxide. However, the supercritical fluid is preferably carbon dioxide for considerations such as the capability to inhibit particle aggregation and provide a denser zirconia sintered body.

· Manufacturing Method of Zirconia Molded Body

In a zirconia molded body manufacturing method of the present invention, a powder containing zirconia particles is subjected to press molding under reduced pressure. The method of press molding is not limited to specific methods, and any press molding machine can be used as long as it is equipped with a unit that can produce reduced pressure. A specific example of press molding is, for example, uniaxial pressing. When a powder is used that contains zirconia particles (preferably, zirconia particles containing yttria as a stabilizing agent) having an average primary particle diameter of 1 to 120 nm, press molding under reduced pressure enables a reduction of remaining air in the press-molded body, ensuring airtightness in the press-molded body (zirconia molded body), producing a formability enhancing effect and improving the production yield of the zirconia molded body.

The zirconia particle-containing powder used for press molding may additionally comprise at least one of a fluorescent agent, a colorant, and a translucency adjuster, such as those exemplified above. The zirconia particle-containing powder may also comprise one or multiple additional components such as the binder, plasticizer, dispersant, emulsifier, antifoaming agent, pH adjuster, and lubricant mentioned above. These components may be incorporated during the preparation of the powder.

Concerning the method of pressing under reduced pressure, the press molding machine is not particularly limited, as long as it is equipped with a unit that can produce reduced pressure. Examples include a powder molding machine (500kN Vibration Wave Molding Machine manufactured by NPa SYSTEM Co., Ltd. under this trade name), a vacuum press molding machine (250-ton Vacuum Press Molding Machine manufactured by IWAKI INDUSTRY Co., Ltd. under this trade name), and a manual hydraulic vacuum heat press (Model IMC-11FD manufactured by Imoto Machinery Co., Ltd.). The zirconia particle-containing powder is filled into a pressure mold (die) of the desired size, and the vacuum device is activated to apply reduced pressure to the zirconia particle-containing powder.

The extent of reduced pressure may be appropriately set according to the intended size of molded body, and the type and particle size of the powder containing zirconia particles. However, the extent of reduced pressure is preferably 100 kPa or less, more preferably 95 kPa or less, even more preferably 85 kPa or less. The extent of reduced pressure is preferably 0.1 kPa or more, more preferably 1 kPa or more, even more preferably 5 kPa or more. When the extent of reduced pressure is higher than 100 kPa, it is not possible to provide the formability enhancing effect by reduced pressure. When the extent of reduced pressure is below 0.1 kPa, it is difficult to ensure airtightness, presenting difficulty in stably obtaining a molded body.

The method by which a zirconia particle-containing powder is subjected to press molding under reduced pressure after it is placed under reduced pressure is not particularly limited, and this can be achieved by using known methods. Examples of such methods include methods that apply pressure by uniaxial pressing with an upper punch and a lower punch.

The temperature under reduced pressure and during press molding is not particularly limited, and may involve heat treatment. The heat treatment temperature may be about 45 to 90°C when heat treatment is conducted.

A certain embodiment is, for example, a method whereby a zirconia particle-containing powder is subjected to press molding under reduced pressure at room temperature, without heating.

The loading pressure (for example, the applied pressure of uniaxial pressing) in press molding may be appropriately set according to the intended size of molded body, and the type and particle size of the powder containing zirconia particles. Typically, the loading pressure is 10 MPa or more. With a loading pressure of 10 MPa or more in press molding, the zirconia particles are densely packed, reducing the gaps between zirconia particles, and increasing the mass (content) of zirconia particles per unit mass of the zirconia molded body. A zirconia sintered body resulting from a zirconia molded body with a high zirconia particle content exhibits even superior translucency and strength. It is therefore preferable to set higher loading pressures in press molding. For example, the loading pressure in press molding is preferably 10 MPa or more, more preferably 20 MPa or more, even more preferably 25 MPa or more.

In view of the size of molded body or productivity, the loading pressure in press molding is, for example, 200 MPa or less, preferably 180 MPa or less, more preferably 150 MPa or less, even more preferably 100 MPa or less, particularly preferably 80 MPa or less. Particularly, the loading pressure in press molding is preferably 10 to 200 MPa, more preferably 20 to 100 MPa, even more preferably 25 to 80 MPa.

The duration of the pressing operation can be appropriately set according to the applied pressure, and typically ranges from 1 to 120 minutes.

In a zirconia molded body manufacturing method of the present invention, uniaxial pressing may be carried out concurrently while reducing pressure from a state under no reduced pressure (atmospheric pressure).

When a powder is used that contains oxide ceramic particles (preferably, zirconia particles containing yttria as a stabilizing agent) having an average primary particle diameter of 1 to 120 nm, press molding under reduced pressure enables a reduction of remaining air in the press-molded body, ensuring airtightness in the oxide ceramic molded body, producing a formability enhancing effect and improving the production yield of the oxide ceramic molded body. Because this can address the specific issues posed by powders containing oxide ceramic particles with an average primary particle diameter of 1 to 120 nm, an oxide ceramic molded body of the present invention is not restricted to zirconia, and the same effect observed for zirconia can also be achieved for other oxide ceramics, provided that these are oxide ceramics (for example, alumina) mentioned earlier. Consequently, the term "zirconia" can be read as referring to oxide ceramics (for example, alumina), except in specific cases where it is not applicable.

The powder containing oxide ceramic particles may be used alone, or two or more thereof may be used in combination. A certain embodiment is, for example, an oxide ceramic molded body manufacturing method in which the powder containing oxide ceramic particles is a powder containing zirconia particles, and/or a powder containing alumina particles.

The uniaxial pressing may be followed by a cold isostatic pressing (CIP) process.

The applied pressure in the CIP process is preferably 30 MPa or more, more preferably 50 MPa or more, even more preferably 100 MPa or more.

The applied pressure is preferably 500 MPa or less, more preferably 400 MPa or less, even more preferably 300 MPa or less. The duration of press molding in the CIP process can be appropriately set according to the applied pressure, and is typically 1 to 60 minutes.

In certain embodiments, a moistening process may be carried out, as in Patent Literature 1. Specifically, a zirconia molded body resulting from the uniaxial pressing may be subjected to a moistening process as a pre-wetted molded body (zirconia molded body) to obtain a wetted molded body, and this wetted molded body, or a zirconia molded body, may be subjected to a pressing process. The pressing process is preferably an isotropic pressing process such as CIP. The pressing process may be carried out under the same conditions employed for the CIP process.

For considerations such as more notably enhancing effectiveness of the present invention, the moisture content of the pre-wetted molded body is preferably 2 mass% or less, more preferably 1.5 mass% or less, even more preferably 1 mass% or less. The moisture content of the pre-wetted molded body can be determined as a percentage of the difference between the mass of the pre-wetted molded body and the absolute dry mass of the pre-wetted molded body divided by the mass of the pre-wetted molded body.

The moistening process may be carried out using any method, for example, such as moistening with a constant humidity device, immersion in a water bath, or water spraying with a spray nozzle or the like. For considerations such as enabling production of a uniform wetted molded body with simple procedures, preferred is moistening with a constant humidity device, more preferably moistening with a constant temperature and humidity device.

For considerations such as more notably enhancing the effectiveness of the present invention, the humidification temperature for moistening with a constant humidity device is preferably 5°C or more, more preferably 10°C or more, even more preferably 20°C or more. The humidification temperature is preferably 50°C or less, more preferably 40°C or less, even more preferably 30°C or less.

In view of considerations such as more notably enhancing the effectiveness of the present invention, as well as productivity, the relative humidity for moistening with a constant humidity device is preferably 60% RH or more, more preferably 65% RH or more, even more preferably 75% RH or more, particularly preferably 85% RH or more at the temperature employed, though the relative humidity depends on factors such as the employed temperature and the duration of moistening.

In view of considerations such as more notably enhancing the effectiveness of the present invention, as well as productivity, the duration of moistening with a constant humidity device is preferably 1 hour or more, more preferably 5 hours or more, even more preferably 10 hours or more, though it depends on factors such as the employed temperature and the relative humidity. The duration of moistening is preferably 7 days or less, more preferably 3 days or less.

For considerations such as more notably enhancing the effectiveness of the present invention, the amount of moisture increase by the moistening process is preferably more than 2 mass%, more preferably more than 3 mass%, even more preferably more than 4 mass%, particularly preferably more than 5 mass% relative to the mass of the pre-wetted molded body, though it depends on factors such as the particle size of the zirconia particles contained. The amount of moisture increase is preferably 15 mass% or less, more preferably 13 mass% or less, even more preferably 11 mass% or less.

When the amount of moisture increase by the moistening process is above these lower limits, the density can more effectively increase in the subsequent pressing process. When the amount of moisture increase by the moistening process is at or below the foregoing upper limits, it is possible to more effectively reduce the generation of defects such as cracking during the drying process following the subsequent pressing process or while pre-sintering or sintering the resultant zirconia molded body.

The amount of moisture increase by the moistening process can also be determined as a percentage of the difference between the mass of the wetted molded body and the mass of the pre-wetted molded body divided by the mass of the pre-wetted molded body.

The pressing process may be followed by drying.

When conducting a drying process, the drying conditions are not particularly limited. However, the drying temperature is preferably 50°C or more, more preferably 80°C or more, even more preferably 100°C or more. The drying temperature is preferably 200°C or less, more preferably 150°C or less, even more preferably 120°C or less.

The drying time is preferably 30 minutes or more, more preferably 1 hour or more, even more preferably 2 hours or more. The drying time is preferably 24 hours or less, more preferably 12 hours or less, even more preferably 6 hours or less.

The drying may be conducted under atmospheric pressure, or under the reduced pressure conditions of less than 1 atmosphere, or under essentially vacuum. When conducting a drying process, the moisture content of the zirconia molded body after drying is preferably 3 mass% or less, more preferably 2 mass% or less, even more preferably 1 mass% or less. The moisture content of the zirconia molded body can be determined as a percentage of the difference between the mass of the zirconia molded body and the absolute dry mass of the zirconia molded body divided by the mass of the zirconia molded body.

A zirconia sintered body that exhibits outstanding translucency and strength can be conveniently produced in high yield with the use of a zirconia molded body created through the moistening process by conducting the moistening process and pressing process.

The molded body can also be obtained by press molding stacked layers of powders containing two or more different types of zirconia particles. For example, the molded body may be created by press molding a powder containing first zirconia particles after it is filled into a mold (die) for uniaxial pressing, followed by filling and press molding a powder containing second zirconia particles over the previously compressed powder containing first zirconia particles. The molded body resulting from this method has a laminated structure with a layer of the powder containing first zirconia particles, and a layer of the powder containing second zirconia particles. The applied pressure of press molding may be appropriately set according to the type and amount of the zirconia particle-containing powder used, and may be different for each layer.

Alternatively, the powder containing first zirconia particles and the powder containing second zirconia particles may be pressed at once after filling the mold with these powders, first with the powder containing first zirconia particles, and, over this powder, the powder containing second zirconia particles.

The shape of the molded body is not particularly limited, and the desired shape can be achieved by changing the mold according to factors such as the intended use of the zirconia molded body produced in the present invention. However, for considerations such as ease of handling of when creating a zirconia pre-sintered body used as a mill blank for producing dental materials such as dental prostheses, the preferred shapes include disc shapes and prism (cuboidal) shapes.

The molded body may have a monolayer structure or multilayer structure. With a multilayer structure, the final zirconia sintered body can also have a multilayer structure, allowing for localized changes in properties such as translucency.

[Zirconia Molded Body]

Using the method described above, it is possible to obtain a desired zirconia molded body. The zirconia molded body may undergo pre-sintering to create a zirconia pre-sintered body, which can then be subjected to sintering to produce a zirconia sintered body. Alternatively, the zirconia molded body may be sintered to yield a zirconia sintered body.

When incorporating a fluorescent agent in the zirconia sintered body, it is preferable to incorporate the fluorescent agent in the zirconia molded body. The content of the fluorescent agent in the zirconia molded body can be appropriately adjusted according to factors such as the content of the fluorescent agent in the zirconia sintered body to be produced.

The content of the fluorescent agent in the zirconia molded body is preferably 0.001 mass% or more, more preferably 0.005 mass% or more, even more preferably 0.01 mass% or more with respect to the mass of the zirconia contained in the zirconia molded body, in terms of an oxide of a metallic element contained in the fluorescent agent. The content of the fluorescent agent is preferably 1 mass% or less, more preferably 0.5 mass% or less, even more preferably 0.1 mass% or less.

When incorporating a colorant in the zirconia sintered body, it is preferable to incorporate the colorant in the zirconia molded body.

The content of the colorant in the zirconia molded body can be appropriately adjusted according to factors such as the content of the colorant in the zirconia sintered body to be produced. The content of the colorant in the zirconia molded body is preferably 0.001 mass% or more, more preferably 0.005 mass% or more, even more preferably 0.01 mass% or more with respect to the mass of the zirconia contained in the zirconia molded body, in terms of an oxide of a metallic element contained in the colorant. The content of the colorant is preferably 5 mass% or less, more preferably 1 mass% or less, even more preferably 0.5 mass% or less. The colorant content may be 0.1 mass% or less, or 0.05 mass% or less.

When incorporating a translucency adjuster in the zirconia sintered body, it is preferable to incorporate the translucency adjuster in the zirconia molded body. The content of the translucency adjuster in the zirconia molded body can be appropriately adjusted according to factors such as the content of the translucency adjuster in the zirconia sintered body to be produced.

Specifically, the content of the translucency adjuster in the zirconia molded body is preferably 0.1 mass% or less with respect to the mass of the zirconia contained in the zirconia molded body.

The content of the stabilizing agent in the zirconia molded body may be the same as that in the zirconia sintered body produced. The content of the stabilizing agent in the zirconia molded body is preferably 2.0 mol% or more, more preferably 3.0 mol% or more, even more preferably 4.0 mol% or more, particularly preferably 4.5 mol% or more. The content of the stabilizing agent may be 5.0 mol% or more, or 5.5 mol% or more. The content of the stabilizing agent is preferably 9.0 mol% or less, more preferably 8.0 mol% or less, even more preferably 7.0 mol% or less.

The content of the stabilizing agent in the zirconia molded body means the proportion of the number of moles of the stabilizing agent with respect to the total number of moles of zirconia and stabilizing agent (mol%).

The density of the zirconia molded body is not particularly limited, and depends on factors such as the manufacturing method of the zirconia molded body. However, for considerations such as enabling production of dense zirconia sintered bodies, the density is preferably 3.0 g/cm³ or more, more preferably 3.2 g/cm³ or more, even more preferably 3.4 g/cm³ or more. The upper limit of density is not particularly limited, and may be, for example, 6.0 g/cm³ or less, or 5.8 g/cm³ or less.

The shape of the zirconia molded body is not particularly limited, and the zirconia molded body may have the desired shape for its intended use. However, for considerations such as ease of handling of when creating a zirconia pre-sintered body used as a mill blank for producing dental materials such as dental prostheses, the preferred shapes include disc shapes and prism (cuboidal) shapes.

The zirconia molded body may have a monolayer structure or multilayer structure. With a multilayer structure, the final zirconia sintered body can also have a multilayer structure, allowing for localized changes in properties such as translucency.

In view of considerations such as ease of handling, the zirconia molded body has a biaxial flexural strength ranging preferably from 2 to 10 MPa, more preferably from 5 to 8 MPa. The biaxial flexural strength of zirconia molded body can be measured in compliance with JIS T 6526:2012.

The zirconia molded body obtained by the foregoing manufacturing method has a crystal grain size of preferably 180 nm or less after being sintered at 1,100°C for 2 hours under atmospheric pressure (after being formed into a zirconia sintered body; sintering under these conditions may be preceded by pre-sintering at 700°C for 2 hours under atmospheric pressure). This enables easy production of a zirconia sintered body having high translucency. For considerations such as producing a zirconia sintered body with even superior translucency, the crystal grain size is more preferably 140 nm or less, even more preferably 120 nm or less, particularly preferably 115 nm or less. The crystal grin size may be 110 nm or less. The lower limit of crystal grain size is not particularly limited, and the crystal grain size may be, for example, 50 nm or more, or 100 nm or more.

The crystal grain size of the zirconia sintered body can be determined by taking an image of a cross section of the zirconia sintered body with a field-emission scanning electron microscope (FE-SEM), and finding the mean value of the diameters of equivalent circles of arbitrarily selected 10 particles (the diameters of true circles with the same areas as the particles) observed in the captured image.

The zirconia molded body obtained by the foregoing manufacturing method has a three-point flexural strength of preferably 700 MPa or more after being sintered at 1,100°C for 2 hours under atmospheric pressure (after being formed into a zirconia sintered body; sintering under these conditions may be preceded by pre-sintering at 700°C for 2 hours under atmospheric pressure). This enables easy production of a zirconia sintered body having high strength. For considerations such as producing a zirconia sintered body with even superior strength, the three-point flexural strength is more preferably 750 MPa or more, even more preferably 800 MPa or more, particularly preferably 850 MPa or more. The three-point flexural strength may be 900 MPa or more. The upper limit of three-point flexural strength is not particularly limited, and the three-point flexural strength may be, for example, 1,500 MPa or less, or 1,000 MPa or less.

The three-point flexural strength of zirconia sintered body can be measured in compliance with JIS R 1601:2008.

The zirconia molded body obtained by the foregoing manufacturing method has a transmittance of preferably 35% or more for light of 700 nm wavelength at 0.5 mm thickness after being sintered at 1,100°C for 2 hours under atmospheric pressure (after being formed into a zirconia sintered body; sintering under these conditions may be preceded by pre-sintering at 700°C for 2 hours under atmospheric pressure). This enables easy production of a zirconia sintered body having high translucency. For considerations such as producing a zirconia sintered body with even superior translucency, the transmittance is more preferably 40% or more, even more preferably 45% or more. The transmittance may be 50% or more, or 52% or more. The upper limit of transmittance is not particularly limited, and the transmittance may be, for example, 60% or less.

The transmittance of zirconia sintered body for light of 700 nm wavelength at 0.5 mm thickness may be measured with a spectrophotometer. For example, a spectrophotometer (Hitachi spectrophotometer, Model U-3900H, manufactured by Hitachi High-Technologies Corporation) can be used to measure transmittance with the use of an integrating sphere by allowing generated light from a light source to pass through and scatter from the sample. In such a measurement, the transmittance for light of 700 nm wavelength may be determined after measuring transmittance in the wavelength region of 300 to 750 nm. The sample used for measurement may be a disc-shaped zirconia sintered body measuring 15 mm in diameter and 0.5 mm in thickness after it is polished to a mirror finish on both sides.

[Manufacturing Method of Zirconia Pre-Sintered Body]

A certain embodiment is, for example, an oxide ceramic pre-sintered body manufacturing method that comprises pre-sintering an oxide ceramic molded body obtained by the method described above.

The following describes a zirconia pre-sintered body manufacturing method, taking a zirconia molded body as an example of an oxide ceramic molded body.

A zirconia pre-sintered body can be obtained by pre-sintering the zirconia molded body. Here, "oxide ceramic pre-sintered body" refers to a state where oxide ceramic particles have undergone block formation without being fully sintered. For example, "zirconia pre-sintered body" refers to a state where zirconia particles have undergone block formation without being fully sintered.

The pre-sintering temperature (highest temperature) in pre-sintering the oxide ceramic molded body is preferably 300°C or more and less than 1,100°C. The pre-sintering temperature can be appropriately selected within a range where the oxide ceramic particles remain incompletely sintered and that does not overlap with the sintering temperature (highest sintering temperature), according to factors such as the type of oxide ceramic, and the average primary particle diameter of oxide ceramic particles. For example, in view of considerations such as easy production of a desired zirconia pre-sintered body, the pre-sintering temperature (highest temperature) of a zirconia molded body when pre-sintering a zirconia molded body is preferably 300°C or more, more preferably 400°C or more, even more preferably 500°C or more. The pre-sintering temperature is preferably less than 900°C, more preferably 850°C or less, even more preferably 800°C or less. When the pre-sintering temperature is at or above these lower limits, it is possible to effectively reduce the generation of organic material residues. When the pre-sintering temperature is at or below the foregoing upper limits, it is possible to prevent the progression of excessive sintering, reducing difficulties in cutting (milling) with a dental milling machine.

Another certain embodiment is, for example, an alumina pre-sintered body manufacturing method that comprises pre-sintering an alumina molded body. In view of considerations such as easy production of a desired alumina pre-sintered body, the pre-sintering temperature (highest temperature) of the alumina molded body is preferably 700°C or more, more preferably 750°C or more, even more preferably 800°C or more. The pre-sintering temperature is preferably less than 1,100°C, more preferably 1,050°C or less, even more preferably 1,000°C or less. When the pre-sintering temperature is at or above these lower limits, it is possible to effectively reduce the generation of organic material residues. When the pre-sintering temperature is at or below the foregoing upper limits, it is possible to prevent the progression of excessive sintering, reducing difficulties in cutting (milling) with a dental milling machine.

The rate of temperature increase in pre-sintering is not particularly limited, and is preferably 0.1°C/min or more, more preferably 0.2°C/min or more, even more preferably 0.5°C/min or more. The rate of temperature increase in pre-sintering is preferably 50°C/min or less, more preferably 30°C/min or less, even more preferably 20°C/min or less. The productivity improves when the rate of temperature increase is at or above these lower limits. When the rate of temperature increase is at or below the foregoing upper limits, it is possible to reduce the volume difference between the inner and outer portions of the zirconia molded body and zirconia pre-sintered body. Additionally, when the zirconia molded body contains organic materials, the rapid decomposition of these organic materials can be reduced to inhibit the occurrence of cracks or fractures.

The duration of pre-sintering in pre-sintering the zirconia molded body is not particularly limited. However, for considerations such as enabling efficient and stable production of a desired zirconia pre-sintered body with good productivity, the duration of pre-sintering is preferably 0.5 hours or more, more preferably 1 hour or more, even more preferably 2 hours or more. The duration of pre-sintering is preferably 10 hours or less, more preferably 8 hours or less, even more preferably 6 hours or less.

Pre-sintering can be carried out with a pre-sintering furnace. The pre-sintering furnace is not particularly limited, and may be, for example, an electric furnace or debinding furnace used industry.

The zirconia pre-sintered body may be cut (milled) into the desired shape for its intended use, before being formed into a zirconia sintered body. Specifically, the present invention enables easy production of a zirconia sintered body in high yield while ensuring superior quality with both high translucency and high strength, and such zirconia sintered bodies are particularly suited as dental prostheses and other dental materials. In order to obtain a zirconia sintered body intended for these applications, the zirconia pre-sintered body can be cut (milled) into the corresponding shape. The cutting (milling) method is not particularly limited, and a known milling machine can be used, for example.

[Zirconia Pre-Sintered Body]

When incorporating a fluorescent agent in the zirconia sintered body, it is preferable to incorporate the fluorescent agent in the zirconia pre-sintered body. The content of the fluorescent agent in the zirconia pre-sintered body can be appropriately adjusted according to factors such as the content of the fluorescent agent in the zirconia sintered body to be produced.

The content of the fluorescent agent in the zirconia pre-sintered body is preferably 0.001 mass% or more, more preferably 0.005 mass% or more, even more preferably 0.01 mass% or more with respect to the mass of the zirconia contained in the zirconia pre-sintered body, in terms of an oxide of a metallic element contained in the fluorescent agent. The content of the fluorescent agent is preferably 1 mass% or less, more preferably 0.5 mass% or less, even more preferably 0.1 mass% or less.

When incorporating a colorant in the zirconia sintered body, it is preferable to incorporate the colorant in the zirconia pre-sintered body. The content of the colorant in the zirconia pre-sintered body can be appropriately adjusted according to factors such as the content of the colorant in the zirconia sintered body to be produced.

The content of the colorant in the zirconia pre-sintered body is preferably 0.001 mass% or more, more preferably 0.005 mass% or more, even more preferably 0.01 mass% or more with respect to the mass of the zirconia contained in the zirconia pre-sintered body, in terms of an oxide of a metallic element contained in the colorant. The colorant content is preferably 5 mass% or less, more preferably 1 mass% or less, even more preferably 0.5 mass% or less. The colorant content may be 0.1 mass% or less, or 0.05 mass% or less.

When incorporating a translucency adjuster in the zirconia sintered body, it is preferable to incorporate the translucency adjuster in the zirconia pre-sintered body. The content of the translucency adjuster in the zirconia pre-sintered body can be appropriately adjusted according to factors such as the content of the translucency adjuster in the zirconia sintered body to be produced. Specifically, the content of the translucency adjuster in the zirconia pre-sintered body is preferably 0.1 mass% or less with respect to the mass of the zirconia contained in the zirconia pre-sintered body.

The yttria content in the zirconia pre-sintered body may be the same as that in the zirconia sintered body produced. The yttria content in the zirconia pre-sintered body is preferably 2.0 mol% or more, more preferably 3.0 mol% or more, even more preferably 4.0 mol% or more, particularly preferably 4.5 mol% or more. The yttria content may be 5.0 mol% or more, or 5.5 mol% or more. The yttria content is preferably 9.0 mol% or less, more preferably 8.0 mol% or less, even more preferably 7.0 mol% or less.

The yttria content in the zirconia pre-sintered body means the proportion of the number of moles of yttria with respect to the total number of moles of zirconia and yttria (mol%).

The density of the zirconia pre-sintered body is not particularly limited, and depends on factors such as the manufacturing method of the zirconia molded body used to produce the zirconia pre-sintered body. However, the density ranges preferably from 3.0 to 6.0 $g/m^3$, more preferably from 3.2 to 5.8 $g/m^3$.

The density of zirconia pre-sintered body can be calculated as, for example, a ratio of the mass of pre-sintered body to the volume of pre-sintered body.

The shape of the zirconia pre-sintered body is not particularly limited, and the zirconia pre-sintered body may have the desired shape for its intended use. However, for considerations such as ease of handling of when the zirconia pre-sintered body is used as a mill blank for producing dental materials such as dental prostheses, the preferred shapes include disc shapes and prism (cuboidal) shapes. The zirconia pre-sintered body can be cut (milled) into the desired shape for its intended use before being formed into a zirconia sintered body, as noted above. The present invention also encompasses such zirconia pre-sintered bodies that have been cut (milled) into the desired shapes.

The zirconia pre-sintered body may have a monolayer structure or multilayer structure. With a multilayer structure, the final zirconia sintered body can also have a multilayer structure, allowing for localized changes in properties such as translucency.

In view of considerations such as maintaining the shape of the workpiece during operation with a dental milling machine while allowing for easy milling in itself, the zirconia pre-sintered body has a three-point flexural strength ranging preferably from 10 to 70 MPa, more preferably from 20 to 60 MPa.

The three-point flexural strength of the zirconia pre-sintered body can be measured following ISO 6872:2015 except for the specimen size, using a specimen measuring 5 mm × 40 mm × 10 mm. For surface finishing, the specimen surfaces, including chamfered surfaces (45° chamfers at the corners of specimen), are finished longitudinally with #600 sandpaper. The specimen is disposed in such an orientation that its widest face is perpendicular to the vertical direction (loading direction). The specimen can be measured with a universal testing machine at a span length (the distance between supports) of 30 mm with a crosshead speed of 0.5 mm/min.

The zirconia pre-sintered body obtained by the manufacturing method above has a crystal grain size of preferably 180 nm or less after being sintered at 1,100°C for 2 hours under atmospheric pressure (after being sintered into a zirconia sintered body). This enables easy production of a zirconia sintered body having high translucency. For considerations such as producing a zirconia sintered body with even superior translucency, the crystal grain size is more preferably 140 nm or less, even more preferably 120 nm or less, particularly preferably 115 nm or less. The crystal grain size may be 110 nm or less. The lower limit of crystal grain size is not particularly limited, and the crystal grain size may be, for example, 50 nm or more, or 100 nm or more. The method of measurement of crystal grain size is as described above for the zirconia molded body.

The zirconia pre-sintered body obtained by the manufacturing method above has a three-point flexural strength of preferably 700 MPa or more after being sintered at 1,100°C for 2 hours under atmospheric pressure (after being sintered into a zirconia sintered body). This enables easy production of a zirconia sintered body having high strength. For considerations such as producing a zirconia sintered body with even superior strength, the three-point flexural strength is more preferably 750 MPa or more, even more preferably 800 MPa or more, particularly preferably 850 MPa or more. The three-point flexural strength may be 900 MPa or more. The upper limit of three-point flexural strength is not particularly limited, and the three-point flexural strength may be, for example, 1,500 MPa or less, or 1,000 MPa or less. The method of measurement of three-point flexural strength is as described above for the zirconia molded body.

The zirconia pre-sintered body obtained by the foregoing manufacturing method has a transmittance of preferably 35% or more for light of 700 nm wavelength at 0.5 mm thickness after being sintered at 1,100°C for 2 hours under atmospheric pressure (after being formed into a zirconia sintered body). This enables easy production of a zirconia sintered body having high translucency. For considerations such as producing a zirconia sintered body with even superior translucency, the transmittance is more preferably 40% or more, even more preferably 45% or more. The transmittance may be 46% or more, 48% or more, 50% or more, or 52% or more. The upper limit of transmittance is not particularly limited, and the transmittance may be, for example, 60% or less. The method of measurement of transmittance is as described above for the zirconia molded body.

The pre-sintered body and the manufacturing method thereof of the present invention are not restricted to zirconia pre-sintered bodies, and are also applicable to alumina and other pre-sintered bodies, provided that these are pre-sintered bodies of oxide ceramics mentioned earlier. Consequently, the term "zirconia pre-sintered body" can be read as referring to oxide ceramic pre-sintered bodies (for example, alumina pre-sintered bodies), except in specific cases where it is not applicable. The enhanced production yield achieved through the reduction of the occurrence of defects such as cracking or chipping in the production of the oxide ceramic molded body enables easy production of oxide ceramic sintered bodies in high yield.

The oxide ceramic used for the oxide ceramic molded body may be a single oxide ceramic, or two or more oxide ceramics used in combination. A certain embodiment is, for example, an oxide ceramic pre-sintered body manufacturing method in which the oxide ceramic molded body is a zirconia molded body or alumina molded body.

When the powder containing alumina particles comprises a stabilizing agent, the stabilizing agent may be sodium oxide, potassium oxide, magnesium oxide, calcium oxide, or ceria. Known stabilizing agents may be used according to the type of oxide ceramic. When the powder containing oxide ceramic particles comprises both a zirconia particle-containing powder and an alumina particle-containing powder, the fractions (mass ratio) of these powders may be decided according to intended use, and are not particularly limited.

[Manufacturing Method of Zirconia Sintered Body]

A certain embodiment is, for example, an oxide ceramic sintered body manufacturing method that comprises sintering the oxide ceramic molded body obtained by the method above, or the oxide ceramic pre-sintered body obtained by the method above. The following describes a zirconia sintered body manufacturing method, taking zirconia as an example of an oxide ceramic. A zirconia sintered body can be obtained by sintering the zirconia molded body or zirconia pre-sintered body, preferably under atmospheric pressure. Here, "oxide ceramic sintered body" refers to a state where oxide ceramic particles are fully sintered. For example, "zirconia sintered body" refers to a state where zirconia particles are fully sintered.

The sintering temperature (highest sintering temperature) in sintering the oxide ceramic molded body or oxide ceramic pre-sintered body is preferably 900°C or more and 1,500°C or less.

The sintering temperature can be appropriately selected within a range where the oxide ceramic particles completely sinter and that does not overlap with the pre-sintering temperature, according to factors such as the type of oxide ceramic, and the average primary particle diameter of oxide ceramic particles. For example, in view of considerations such as easy production of a desired zirconia sintered body, the sintering temperature (highest sintering temperature) in sintering the zirconia molded body or zirconia pre-sintered body is preferably 900°C or more, more preferably 1,000°C or more, even more preferably 1,050°C or more, regardless of whether the zirconia molded body or zirconia pre-sintered body is sintered. The sintering temperature is preferably 1,200°C or less, more preferably 1,150°C or less, even more preferably 1,120°C or less. When the sintering temperature is at or above these lower limits, sintering can sufficiently proceed, enabling easy production of dense sintered bodies. When the sintering temperature is at or below the foregoing upper limits, it is possible to easily obtain a zirconia sintered body with a crystal grain size within the foregoing ranges. Additionally, deactivation of fluorescent agents can be reduced when they are incorporated.

Another certain embodiment is, for example, an alumina sintered body manufacturing method that comprises sintering the alumina molded body obtained by the method above, or the alumina pre-sintered body obtained by the method above. In view of considerations such as easy production of a desired alumina sintered body, the sintering temperature (highest sintering temperature) is preferably 1,200°C or more, more preferably 1,250°C or more, even more preferably 1,300°C or more, regardless of whether the alumina molded body or alumina pre-sintered body is sintered. The sintering temperature is preferably 1,500°C or less, more preferably 1,450°C or less, even more preferably 1,400°C or less. When the sintering temperature is at or above these lower limits, sintering can sufficiently proceed, enabling easy production of dense sintered bodies. When the sintering temperature is at or below the foregoing upper limits, it is possible to easily obtain an alumina sintered body with a crystal grain size within the foregoing ranges. Additionally, deactivation of fluorescent agents can be reduced when they are incorporated.

The duration of sintering is not particularly limited, regardless of whether the zirconia molded body or zirconia pre-sintered body is sintered. However, for considerations such as enabling efficient and stable production of a desired zirconia sintered body with good productivity, the duration of sintering is preferably 5 minutes or more, more preferably 15 minutes or more, even more preferably 30 minutes or more. The duration of sintering is preferably 6 hours or less, more preferably 4 hours or less, even more preferably 2 hours or less.

Sintering can be carried out with a sintering furnace, regardless of whether the zirconia molded body or zirconia pre-sintered body is sintered. The sintering furnace is not particularly limited, and may be, for example, an electric furnace or debinding furnace used industry. Specifically, for dental material applications, it is possible to use a dental porcelain furnace, which involves a relatively low sintering temperature, aside from conventional dental sintering furnaces for zirconia.

The zirconia sintered body can be produced with ease, even without a hot isostatic pressing (HIP) process. However, the translucency and strength can further improve when a hot isostatic pressing (HIP) process follows the sintering performed under atmospheric pressure.

[Zirconia Sintered Body]

The zirconia sintered body may comprise a fluorescent agent. The zirconia sintered body shows fluorescence by comprising a fluorescent agent. The content of the fluorescent agent in the zirconia sintered body is not particularly limited, and may be appropriately adjusted according to factors such as the type of fluorescent agent, and the intended use of the zirconia sintered body.

In view of considerations such as suitability as a dental prosthesis, the content of fluorescent agent is preferably 0.001 mass% or more, more preferably 0.005 mass% or more, even more preferably 0.01 mass% or more with respect to the mass of the zirconia contained in the zirconia sintered body, in terms of an oxide of a metallic element contained in the fluorescent agent. The content of fluorescent agent is preferably 1 mass% or less, more preferably 0.5 mass% or less, even more preferably 0.1 mass% or less. When the content is at or above these lower limits, the fluorescence can be comparable to that of human natural teeth. When the content of fluorescent agent is at or below the foregoing upper limits, it is possible to reduce a decrease in translucency and strength.

The zirconia sintered body may comprise a colorant. By comprising a colorant, the zirconia sintered body becomes a colored zirconia sintered body. The content of the colorant in the zirconia sintered body is not particularly limited, and may be appropriately adjusted according to factors such as the type of colorant, and the intended use of the zirconia sintered body.

In view of considerations such as suitability as a dental prosthesis, the colorant content is preferably 0.001 mass% or more, more preferably 0.005 mass% or more, even more preferably 0.01 mass% or more with respect to the mass of the zirconia contained in the zirconia sintered body, in terms of an oxide of a metallic element contained in the colorant. The colorant content is preferably 5 mass% or less, more preferably 1 mass% or less, even more preferably 0.5 mass% or less. The colorant content may be 0.1 mass% or less, or 0.05 mass% or less.

The zirconia sintered body may comprise a translucency adjuster, in order to adjust the translucency in the zirconia sintered body. The content of the translucency adjuster in the zirconia sintered body is not particularly limited, and may be appropriately adjusted according to factors such as the type of translucency adjuster, and the intended use of the zirconia sintered body. In view of considerations such as suitability as a dental prosthesis, the content of translucency adjuster is preferably 0.1 mass% or less with respect to the mass of the zirconia contained in the zirconia sintered body.

For considerations such as providing a zirconia sintered body having even superior translucency and strength, the yttria content in the zirconia sintered body is preferably 2.0 mol% or more, more preferably 3.0 mol% or more, even more preferably 4.0 mol% or more, particularly preferably 4.5 mol% or more. The yttria content may be 5.0 mol% or more, or 5.5 mol% or more. The yttria content is preferably 9.0 mol% or less, more preferably 8.0 mol% or less, even more preferably 7.0 mol% or less.

The yttria content in the zirconia sintered body means the proportion of the number of moles of yttria with respect to the total number of moles of zirconia and yttria (mol%).

In view of considerations such as even superior translucency, the crystal grain size of the zirconia sintered body obtained by the foregoing manufacturing method is preferably 180 nm or less, more preferably 140 nm or less, even more preferably 120 nm or less, particularly preferably 115 nm or less. The crystal grain size may be 110 nm or less. The lower limit of crystal grain size is not particularly limited, and the crystal grain size may be, for example, 50 nm or more, or 100 nm or more. The method of measurement of crystal grain size is as described above in conjunction with the zirconia molded body.

In view of considerations such as even superior strength, the zirconia sintered body obtained by the foregoing manufacturing method has a three-point flexural strength of preferably 700 MPa or more, more preferably 750 MPa or more, even more preferably 800 MPa or more, particularly preferably 850 MPa or more. The three-point flexural strength may be 900 MPa or more. The upper limit of three-point flexural strength is not particularly limited, and the three-point flexural strength may be, for example, 1,500 MPa or less, or 1,000 MPa or less. The method of measurement of three-point flexural strength is as described above in conjunction with the zirconia molded body.

In view of considerations such as even superior translucency, the zirconia sintered body obtained by the foregoing manufacturing method has a transmittance of preferably 35% or more, more preferably 40% or more, even more preferably 45% or more for light of 700 nm wavelength at 0.5 mm thickness. The transmittance may be 46% or more, 50% or more, or 52% or more. The upper limit of transmittance is not particularly limited, and the transmittance may be, for example, 60% or less, or 57% or less. The method of measurement of transmittance is as described above in conjunction with the zirconia molded body.

The predominant crystalline phase of the zirconia sintered body obtained by the foregoing manufacturing method may be a tetragonal crystal system or a cubic crystal system. Preferably, the predominant crystalline phase is a cubic crystal system. The cubic crystal system accounts for preferably 10% or more, more preferably 50% or more, even more preferably 70% or more of the zirconia sintered body. The fraction of the cubic crystal system in the zirconia sintered body can be determined by examining its crystalline phase. Specifically, the X-ray diffraction (XRD) technique can be employed to measure the surface of the zirconia sintered body in areas processed to a mirror finish, using the following formula.

$$f_c = I_c/(I_m+I_t+I_c) \times 100,$$

where $f_c$ represents the fraction (%) of the cubic crystal system in the zirconia sintered body, $I_m$ represents the height of a peak near $2\theta = 28°$ (a peak based on the monoclinic crystal system), It represents the height of a peak near $2\theta = 30°$ (a peak based on the tetragonal crystal system), and $I_c$ represents the height of a peak near $2\theta = 30°$ (a peak based on the cubic crystal system). In cases where the peak near $2\theta = 30°$ appears as a peak arising from the mixed phase of tetragonal crystal system and cubic crystal system, and it is difficult to distinguish the peaks attributed to the tetragonal crystal system and cubic crystal system, It and $I_c$ can be determined by multiplying the ratio of tetragonal crystal system and cubic crystal system by the height ($I_{t+c}$) of the peak derived from the mixed phase, after finding the ratio of tetragonal crystal system and cubic crystal system using a method such as the Rietveld method.

In the zirconia sintered body obtained by the foregoing manufacturing method, the fraction of the monoclinic crystal system with respect to the tetragonal and cubic crystal systems accounts for preferably 5% or less, more preferably 3% or less, even more preferably 1% or less after 5 hours of immersion in 180°C hot water. With the fraction confined in these ranges, it is possible to inhibit volume changes over time and prevent fractures in, for example, dental prosthesis applications. The fraction can be determined by processing the surface of the zirconia sintered body to a mirror finish, immersing it in 180°C hot water for 5 hours, and conducting X-ray diffraction (XRD) measurements on this part of the zirconia sintered body, using the following formula.

$$f_m = [I_{28}/(I_{28}+I_{30})] \times 100,$$

where $f_m$ represents the fraction (%) of the monoclinic crystal system with respect to the tetragonal and cubic crystal systems in the zirconia sintered body after 5 hours of immersion in 180°C hot water, and $I_{28}$ represents the area of a peak near $2\theta = 28°$, where the main peak of the monoclinic crystal system appears, and $I_{30}$ represents the area of a peak near $2\theta = 30°$, where the main peak of the tetragonal or cubic crystal system appears in XRD measurement.

[Uses of Zirconia Sintered Body]

The zirconia sintered body is not limited to particular uses. However, because the present invention enables easy production of a zirconia sintered body in high yield while ensuring superior quality with both high translucency and high strength, the zirconia sintered body is particularly suited for applications such as dental prostheses and other dental materials, and is highly useful not only as a dental prosthesis used for the cervical region but also as a dental prosthesis used for the occlusal surface of a posterior tooth, or the incisal region of a front tooth. Particularly, the zirconia sintered body is preferred for use as a dental prosthesis used for the incisal region of a front tooth.

The sintered body and the manufacturing method thereof of the present invention are not restricted to zirconia sintered bodies, and are also applicable to alumina and other sintered bodies, provided that these are sintered bodies of oxide ceramics mentioned earlier. Consequently, the term "zirconia sintered body" can be read as referring to oxide ceramic sintered bodies (for example, alumina sintered bodies), except in specific cases where it is not applicable. The enhanced production yield achieved through the reduction of the occurrence of defects such as cracking or chipping in the production of the oxide ceramic molded body enables easy production of oxide ceramic sintered bodies in high yield.

EXAMPLES

The present invention is described below in greater detail using Examples and Comparative Examples. It is to be noted, however, that the present invention is not limited by the following. The following methods were used for the measurement of various properties.

(1) Average primary particle diameter of oxide ceramic particles

An image of oxide ceramic particles was taken with a transmission electron microscope (TEM), and the particle diameter (maximum diameter) was measured for arbitrarily selected 100 particles in the captured image. The mean value of these particle diameters was then determined as the average primary particle diameter of the oxide ceramic particles.

(2) Three-point flexural strength

The three-point flexural strength of oxide ceramic sintered body was measured in compliance with JIS R 1601:2008.

(3) Light transmittance (700 nm wavelength at 0.5 mm thickness)

The oxide ceramic sintered body was measured for transmittance for light of 700 nm wavelength at 0.5 mm thickness with the use of an integrating sphere by allowing generated light from a light source to pass through and scatter from the sample, using a spectrophotometer (Hitachi spectrophotometer, Model U-3900H, manufactured by Hitachi High-Technologies Corporation). In the measurement, the transmittance for light of 700 nm wavelength was determined after measuring transmittance in the wavelength region of 300 to 750 nm. A disc-shaped oxide ceramic sintered body, measuring 15 mm in diameter and 0.5 mm in thickness, was used as a measurement sample after it was polished to a mirror finish on both sides.

(4) Appearance of molded body and pre-sintered body (cracking or chipping)

The appearance of oxide ceramic molded body and oxide ceramic pre-sintered body (cracking or chipping) was visually evaluated.

[Example 1]

To an aqueous zirconia slurry containing 3 mol% of yttria (MELox Nanosize 3Y manufactured by MEL Chemicals; average primary particle diameter of zirconia particles: 14 nm; zirconia concentration: 24 mass%), isopropanol was added in 9 times the volume of the zirconia slurry. These were placed in a centrifuge tube and thoroughly mixed, and centrifuged at 4,000 rpm for 15 minutes. The supernatant was removed after confirming settling of a white material. After adding isopropanol again, the components were thoroughly mixed, and centrifuged at 4,000 rpm for 10 minutes. The supernatant was removed after confirming settling of a white material, and methanol was added to provide an equivalent volume to that of the zirconia slurry used. A methanol substituted slurry was obtained after thorough mixing.

The methanol substituted slurry was dried with a spray dryer (B-290 manufactured by Nihon BUCHI K.K.) at a feed rate of 5 mL/min with an inlet temperature of 150°C and an outlet temperature of 100°C, yielding a powder containing zirconia particles.

Subsequently, this powder was formed into a block (a single block), measuring 40 mm × 20 mm × 20 mm, by applying a uniaxial pressure of 100 MPa under a reduced pressure of 80 kPa at room temperature, using a vacuum press molding machine (250-ton Vacuum Press Molding Machine manufactured by IWAKI INDUSTRY Co., Ltd. under this trade name). A total of one-hundred press-molded bodies were produced. For these one-hundred press-molded bodies, the percentage of defective samples (%) was determined by counting the number of samples that showed external cracking or chipping. The results are presented in Table 1.

In view of the productivity of molded bodies, the preferred percentage of detective samples in the production of molded bodies is 12% or less, more preferably 8% or less, even more preferably 5% or less.

Zirconia molded bodies that exhibited no external cracking or chipping during the production of the one-hundred press-molded bodies were pre-sintered at 600°C for 3 hours under atmospheric pressure to yield zirconia pre-sintered bodies (for example, 98 molded bodies were pre-sintered in Example 1). For these zirconia pre-sintered bodies, the percentage of defective samples (%) was determined by counting the number of samples that showed external cracking or chipping. The results are presented in Table 1.

In view of the productivity of pre-sintered bodies, the preferred percentage of detective samples in the production of pre-sintered bodies is 10% or less, more preferably 8% or less, even more preferably 5% or less.

Among the zirconia pre-sintered bodies produced, those that exhibited no cracking or chipping were sintered to yield sintered bodies (for example, 96 pre-sintered bodies were sintered in Example 1). Specifically, sintered bodies were obtained after 2 hours of sintering at 1,100°C under atmospheric pressure. The resultant sintered bodies were white in color. None of the sintered bodies showed chipping or cracking after visual examination for chipping and cracking.

The zirconia sintered bodies were also measured for light transmittance, following the method described above. The three-point flexural strength of the zirconia sintered bodies was also measured, following the method described above (specimen size: 40 mm × 4 mm × 3 mm; span length: 30 mm). The measurement results are presented in Table 1.

[Comparative Example 1]

Zirconia molded bodies, zirconia pre-sintered bodies, and zirconia sintered bodies were produced in the same manner as in Example 1, except that the procedure was conducted under atmospheric pressure, rather than reduced pressure.

The zirconia sintered bodies produced were measured for light transmittance, following the method described above. The three-point flexural strength of the zirconia sintered bodies were also measured, following the method described above (plate-shaped zirconia sintered bodies with a specimen size of 40 mm × 4 mm × 3 mm; span length: 30 mm). The measurement results are presented in Table 1. Because the procedure did not take place under reduced pressure, an increased occurrence of chipping or cracking was observed in the molded bodies during the production of molded bodies and pre-sintered bodies, leading to a reduced yield in comparison to Example 1. Additionally, the translucency was diminished, possibly due to the presence of internal bubbles or defects.

[Example 2]

A 2-(2-ethoxyethoxy)ethanol substituted slurry was obtained following the procedure of Example 1, except that 2-(2-ethoxyethoxy)ethanol was used instead of methanol, and that the zirconia slurry employed was an aqueous zirconia slurry containing 5 mol% of yttria (MELox Nanosize 5Y manufactured by MEL Chemicals; average primary particle diameter of zirconia particles: 25 nm; zirconia concentration: 25 mass%). The extent of reduced pressure was set at 20 kPa, and the uniaxial pressure at 160 MPa.

Zirconia molded bodies, zirconia pre-sintered bodies, and zirconia sintered bodies containing zirconia particles were obtained following the same procedure described in Example 1 except for using the 2-(2-ethoxyethoxy)ethanol substituted slurry. The zirconia sintered bodies produced were white in color. The results are presented in Table 1.

[Example 3]

A 2-(2-ethoxyethoxy)ethanol substituted slurry was obtained following the procedure of Example 1, except that 2-(2-ethoxyethoxy)ethanol was used instead of methanol, and that the zirconia slurry employed was an aqueous zirconia slurry containing 4.5 mol% of yttria (MELox Nanosize 4.5Y manufactured by MEL Chemicals; average primary particle diameter of zirconia particles: 14 nm; zirconia concentration: 23 mass%). The press molding process took place with a gradual decrease in reduced pressure to 1 kPa, and the uniaxial pressure set at 40 MPa, using a manual hydraulic vacuum heat press (Model IMC-11FD manufactured by Imoto Machinery Co., Ltd.).

Zirconia molded bodies, zirconia pre-sintered bodies, and zirconia sintered bodies containing zirconia particles were obtained following the same procedure described in Example 1 except for using the 2-(2-ethoxyethoxy)ethanol substituted slurry. The zirconia sintered bodies produced were white in color. The results are presented in Table 1.

[Example 4]

A slurry containing zirconia particles and colorant was obtained by adding a nickel(II) nitrate aqueous solution to a 2-(2-ethoxyethoxy)ethanol substituted slurry obtained in the same manner as described in Example 3. Here, the nickel(II) nitrate aqueous solution was added to provide a nickel(II) oxide (NiO) equivalent content of 0.02 mass% with respect to the mass of zirconia. Subsequently, the slurry was dried with a spray dryer (B-290 manufactured by Nihon BUCHI K.K.) at a feed rate of 5 mL/min with an inlet temperature of 150°C and an outlet temperature of 100°C, yielding a powder containing zirconia particles and colorant.

The powder was used to obtain zirconia molded bodies, zirconia pre-sintered bodies, and zirconia sintered bodies following the same procedure described in Example 1, except that the procedure took place with the extent of reduced pressure set at 1 kPa, and the uniaxial pressure at 40 MPa. The zirconia sintered bodies produced were red in color (with no fluorescence). The results are presented in Table 1. The zirconia pre-sintered bodies were milled into a crown shape for maxillary central incisors and mandibular first molars, using a milling machine (NORITAKE KATANA® H-18 manufactured by Kuraray Noritake Dental Inc.). These were then sintered at 1,100°C for 2 hours under atmospheric pressure, yielding red colored crown-shaped dental prostheses.

[Example 5]

The 2-(2-ethoxyethoxy)ethanol substituted slurry obtained in Example 2 was supercritically dried with a supercritical drying machine, using the following procedure. Specifically, the 2-(2-ethoxyethoxy)ethanol substituted slurry was placed in a pressure vessel, and the pressure vessel was joined to a supercritical carbon dioxide extractor. After checking for pressure leaks, the pressure vessel and the preheating tube were immersed in a water bath that had been heated to 60°C, and were left to stand for 10 minutes to stabilize after increasing temperature to 80°C and increasing pressure to 25 MPa. Thereafter, carbon dioxide was introduced under predetermined conditions, together with methanol used as an entrainer (temperature: 80°C, pressure: 25 MPa, carbon dioxide flow rate: 10 mL/min, entrainer (methanol) flow rate: 1.5 mL/min). After an elapsed time period of two hours, the addition of methanol was stopped, without halting the introduction of carbon dioxide. After two hours of sole carbon dioxide introduction, its delivery was stopped, and the pressured was gradually reduced from 25 MPa back to atmospheric pressure over a time period of approximately 20 minutes while maintaining the temperature at 80°C. The pressure vessel was removed from the water bath and cooled to ordinary temperature, then opened to collect the processed sample, obtaining a powder containing zirconia particles.

The powder was used to obtain zirconia molded bodies, zirconia pre-sintered bodies, and zirconia sintered bodies following the same procedure described in Example 1, except that the procedure took place with the extent of reduced pressure set at 20 kPa, and the uniaxial pressure at 20 MPa. The zirconia sintered bodies produced were white in color. The results are presented in Table 1.

[Example 6]

A slurry containing zirconia particles and fluorescent agent was obtained by adding a bismuth hydroxide aqueous solution to a 2-(2-ethoxyethoxy)ethanol substituted slurry obtained in the same manner as described in Example 3. Here, the bismuth hydroxide aqueous solution was added to provide a bismuth oxide ($Bi_2O_3$) equivalent content of 0.02 mass% with respect to the mass of zirconia. Subsequently, the slurry was dried with a spray dryer (B-290 manufactured by Nihon BUCHI K.K.) at a feed rate of 5 mL/min with an inlet temperature of 150°C and an outlet temperature of 100°C, yielding a powder containing zirconia particles and fluorescent agent.

The powder was used to obtain zirconia molded bodies, zirconia pre-sintered bodies, and zirconia sintered bodies following the same procedure described in Example 1, except that the procedure took place with the extent of reduced pressure set at 0.2 kPa, and the uniaxial pressure at 50 MPa, using a manual hydraulic vacuum heat press (Model IMC-11FD manufactured by Imoto Machinery Co., Ltd.). The zirconia sintered bodies produced were white in color, and had fluorescence. The results are presented in Table 1.

The zirconia pre-sintered bodies were milled into a crown shape for maxillary central incisors and mandibular first molars, using a milling machine (NORITAKE KATANA H-18 manufactured by Kuraray Noritake Dental Inc.). These were then sintered at 1,100°C for 2 hours under atmospheric pressure, yielding crown-shaped dental prostheses with fluorescence.

[Example 7]

To an aqueous zirconia slurry containing 4.5 mol% of yttria (MELox Nanosize 4.5Y manufactured by MEL Chemicals; average primary particle diameter of zirconia particles: 14 nm; zirconia concentration: 23 mass%), isopropanol was added in 9 times the volume of the zirconia slurry. These were placed in a centrifuge tube and thoroughly mixed, and centrifuged at 4,000 rpm for 15 minutes. The supernatant was removed after confirming settling of a white material. After adding isopropanol again, the components were thoroughly mixed, and centrifuged at 4,000 rpm for 10 minutes. The supernatant was removed after confirming settling of a white material, and methanol was added to provide an equivalent volume to that of the zirconia slurry used. A methanol substituted slurry was obtained after thorough mixing.

The methanol substituted slurry was dried with a spray dryer (B-290 manufactured by Nihon BUCHI K.K.) at a feed rate of 5 mL/min with an inlet temperature of 150°C and an outlet temperature of 100°C, yielding a powder containing zirconia particles. Subsequently, this powder was formed into a block (a single block), measuring 40 mm × 20 mm × 20 mm, by applying a uniaxial pressure of 15 MPa under a reduced pressure of 20 kPa, using a vacuum press molding machine (250-ton Vacuum Press Molding Machine manufactured by IWAKI INDUSTRY Co., Ltd. under this trade name).

A total of one-hundred press-molded bodies were produced by repeating the press molding process 100 times. For these one-hundred press-molded bodies, the percentage of defective samples (%) was determined by counting the number of samples that showed external cracking or chipping. The results are presented in Table 1.

Subsequently, the molded bodies that exhibited no cracking or chipping were subjected to CIP under 200 MPa, using CIP equipment (Model ADW800) manufactured by Kobe Steel, Ltd. After CIP, the zirconia molded bodies were pre-sintered at 600°C for 3 hours under atmospheric pressure to obtain zirconia pre-sintered bodies. For these pre-sintered bodies, the percentage of defective samples (%) was determined by counting the number of samples that showed external cracking or chipping. The results are presented in Table 1.

[Example 8]

The white zirconia particles obtained in Example 3, and the red colored zirconia particles obtained in Example 4 were designated as (A) and (B), respectively. The label (C) was used to designate a powder obtained by mixing (A) and (B) in a bag at a mass ratio of 1:2, and the label (D) was used to designate a powder obtained by mixing (A) and (B) in a bag at a mass ratio of 2:1. Using a vacuum press molding machine (250-ton Vacuum Press Molding Machine manufactured by IWAKI INDUSTRY Co., Ltd. under this trade name), the powders (A), (C), (D), and (B) were sequentially loaded in equal masses, and formed into a block (a single block), measuring 40 mm × 20 mm × 20 mm, by applying a uniaxial pressure of 70 MPa under a reduced pressure of 10 kPa.

A total of one-hundred press-molded bodies were produced. For these one-hundred press-molded bodies, the percentage of defective samples (%) was determined by counting the number of samples that showed external cracking or chipping. The results are presented in Table 1. Additionally, the zirconia molded bodies that exhibited no external cracking or chipping were pre-sintered at 600°C for 3 hours under atmospheric pressure to obtain zirconia pre-sintered bodies. For these pre-sintered bodies, the percentage of defective samples (%) was determined by counting the number of samples that showed external cracking or chipping. The results are presented in Table 1.

[Example 9]

The white zirconia particles obtained in Example 1, Example 3, and Example 2 were designated as (E), (F), and (G), respectively. Using a manual hydraulic vacuum heat press (Model IMC-11FD manufactured by Imoto Machinery Co., Ltd.), the powders (E), (F), and (G) were sequentially loaded in equal masses, and formed into a block (a single block), measuring 40 mm × 20 mm × 20 mm, by applying a uniaxial pressure of 100 MPa with a gradual decrease in reduced pressure to 10 kPa.

A total of one-hundred press-molded bodies were produced. For these one-hundred press-molded bodies, the percentage of defective samples (%) was determined by counting the number of samples that showed external cracking or chipping. The results are presented in Table 1. Additionally, the zirconia molded bodies that exhibited no external cracking or chipping were pre-sintered at 600°C for 3 hours under atmospheric pressure to obtain zirconia pre-sintered bodies. For these pre-sintered bodies, the percentage of defective samples (%) was determined by counting the number of samples that showed external cracking or chipping. The results are presented in Table 1.

[Example 10]

Zirconia molded bodies, zirconia pre-sintered bodies, and zirconia sintered bodies (with no fluorescence) were obtained following the same procedure described in Example 1, except that the procedure took place with the extent of reduced pressure set at 100 kPa. The results are presented in Table 1.

[Example 11]

Zirconia molded bodies, zirconia pre-sintered bodies, and zirconia sintered bodies (with no fluorescence) were obtained following the same procedure described in Example 1, except that the procedure took place with the extent of reduced pressure set at 96 kPa. The results are presented in Table 1.

[Example 12]

The raw material powder was prepared by adding 1,000 ppm of magnesium oxide (manufactured y Fuji Film Wako Pure Chemical Industries, Ltd.) to a high-purity α-alumina powder TM-DA (manufactured by TAIMEI CHEMICALS Co., Ltd.), and pulverizing the mixture in ethanol with a bead mill (RMB II manufactured by AIMEX Co., Ltd. under this trade name), followed by drying. The alumina particles had an average primary particle diameter of 100 nm. This was followed by press molding, pre-sintering, and sintering, using the same procedures described in Example 1. The results are presented in Table 1.

[Comparative Example 2]

Zirconia molded bodies, zirconia pre-sintered bodies, and zirconia sintered bodies were obtained in the same manner as in Example 1, except that the procedure of Example 2 was conducted under atmospheric pressure, rather than reduced pressure. Because the procedure did not take place under reduced pressure, an increased occurrence of chipping or cracking was observed in the molded bodies during the production of molded bodies and pre-sintered bodies, leading to a reduced yield in comparison to Example 2. Additionally, the translucency was diminished, possibly due to the presence of internal bubbles or defects.

[Comparative Example 3]

Zirconia molded bodies, zirconia pre-sintered bodies, and zirconia sintered bodies were obtained in the same manner as in Example 3, except that the procedure of Example 3 was conducted under atmospheric pressure, rather than reduced pressure, by employing the production conditions presented in Table 1. Because the procedure did not take place under reduced pressure, an increased occurrence of chipping or cracking was observed in the molded bodies during the production of molded bodies and pre-sintered bodies, leading to a reduced yield in comparison to Example 3. Additionally, the translucency was diminished, possibly due to the presence of internal bubbles or defects.

[Comparative Example 4]

Zirconia molded bodies, zirconia pre-sintered bodies, and zirconia sintered bodies were obtained in the same manner as in Example 7, except that the procedure of Example 7 was conducted under atmospheric pressure, rather than reduced pressure, by employing the production conditions presented in Table 1. Because the procedure did not take place under reduced pressure, an increased occurrence of chipping or cracking was observed in the molded bodies during the production of molded bodies and pre-sintered bodies, leading to a reduced yield in comparison to Example 7. Additionally, the translucency was diminished, possibly due to the presence of internal bubbles or defects.

[Table 1]

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Com. Ex. 1 | Com. Ex. 2 | Com. Ex. 3 | Com. Ex. 4 |
|---|---|---|---|---|---|---|---|---|---|---|---|---|---|---|---|---|
| Average primary particle diameter of oxide ceramic particles [nm] | 14 | 25 | 14 | 14 | 14 | 14 | 14 | 14 | 14,14,25 | 14 | 14 | 100 | 14 | 25 | 14 | 14 |
| Extent of reduced pressure during pressing [kPa] | 80 | 20 | 1 | 1 | 20 | 0.2 | 20 | 10 | 10 | 100 | 96 | 80 | 101 (atm) | 101 (atm) | 101 (atm) | 101 (atm) |
| Loading pressure in uniaxial pressing [MPa] | 100 | 160 | 40 | 40 | 20 | 50 | 15 | 70 | 100 | 100 | 100 | 100 | 100 | 160 | 100 | 15 |
| CIP pressure [MPa] | N/A | N/A | N/A | N/A | N/A | N/A | 200 | N/A | N/A | N/A | N/A | N/A | N/A | N/A | N/A | 700 |
| Percentage defect in production of molded body [%] | 2 | 2 | 0 | 0 | 4 | 2 | 4 | 4 | 2 | 12 | 8 | 1 | 34 | 38 | 42 | 32 |
| Percentage defect in production of pre-sintered body [%] | 2 | 0 | 4 | 4 | 2 | 2 | 2 | 2 | 0 | 8 | 6 | 1 | 26 | 28 | 32 | 30 |
| Total transmittance of sintered body at 700 nm [%] | 52 | 51 | 53 | 53 | 55 | 49 | 48 | 51 | 50 | 43 | 45 | 50 | 32 | 33 | 34 | 31 |
| Three-point flexural strength of sintered body [MPa] | 850 | 921 | 862 | 862 | 901 | 892 | 971 | 958 | 911 | 829 | 841 | 815 | 791 | 752 | 761 | 773 |

N/A represents no CIP molding.

INDUSTRIAL APPLICABILITY

An oxide ceramic molded body manufacturing method of the present invention has wide industrial applications, and is particularly suitable for dental material applications such as dental prostheses.

**Claims**

1. A method for manufacturing an oxide ceramic molded body, comprising subjecting a powder containing oxide ceramic particles with an average primary particle diameter of 1 to 120 nm to press molding under reduced pressure.

2. The method for manufacturing an oxide ceramic molded body according to claim 1, wherein the press molding is conducted under a reduced pressure of 0.1 kPa or more and 100 kPa or less.

3. The method for manufacturing an oxide ceramic molded body according to claim 1 or 2, wherein the press molding involves a loading pressure of 10 MPa or more and 200 MPa or less.

4. The method for manufacturing an oxide ceramic molded body according to any one of claims 1 to 3, wherein the powder containing oxide ceramic particles is a powder containing zirconia particles, and/or a powder containing alumina particles.

5. The method for manufacturing an oxide ceramic molded body according to claim 4, wherein the powder containing oxide ceramic particles additionally contains a stabilizing agent capable of preventing a phase transformation of zirconia.

6. The method for manufacturing an oxide ceramic molded body according to claim 5, wherein:

   the powder containing oxide ceramic particles is a powder containing zirconia particles, and
   the stabilizing agent is yttria.

7. The method for manufacturing an oxide ceramic molded body according to claim 6, wherein the content of the yttria is 2.0 mol% or more and 9.0 mol% or less with respect to a total number of moles of the zirconia and the yttria.

8. A method for manufacturing an oxide ceramic pre-sintered body, comprising pre-sintering a molded body obtained by the method of any one of claims 1 to 7.

9. The method for manufacturing an oxide ceramic pre-sintered body according to claim 8, wherein the pre-sintering involves a temperature of 300°C or more and less than 1,100°C.

10. The method for manufacturing an oxide ceramic pre-sintered body according to claim 8 or 9, wherein the oxide ceramic molded body is a zirconia molded body or an alumina molded body.

11. A method for manufacturing an oxide ceramic sintered body, comprising sintering an oxide ceramic molded body obtained by the method of any one of claims 1 to 7, or an oxide ceramic pre-sintered body obtained by the method of any one of claims 8 to 10.

12. The method for manufacturing an oxide ceramic sintered body according to claim 11, wherein the sintering involves a temperature of 900°C or more and 1,500°C or less.

## INTERNATIONAL SEARCH REPORT

| International application No. |
| --- |
| **PCT/JP2022/046462** |

**A.    CLASSIFICATION OF SUBJECT MATTER**

*B28B 3/02*(2006.01)i; *B82Y 99/00*(2011.01)n; *A61C 13/083*(2006.01)i; *C04B 35/486*(2006.01)i
FI:    B28B3/02 E; C04B35/486; A61C13/083; B82Y99/00

According to International Patent Classification (IPC) or to both national classification and IPC

**B.    FIELDS SEARCHED**

Minimum documentation searched (classification system followed by classification symbols)

B28B3/02; B82Y99/00; A61C13/083; C04B35/486

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2018/056331 A1 (KURARAY NORITAKE DENTAL INC) 29 March 2018 (2018-03-29)<br>claims, paragraphs [0067], [0088], [0099], [0142]-[0143] | 1-12 |
| Y | CN 111704448 A (JIYUAN JINFENG REFRACTORY MATERIAL CO., LTD.) 25 September 2020 (2020-09-25)<br>claims, example 1, paragraph [0036] | 1-12 |
| Y | JP 2004-504195 A (CK MANAGEMENT AB UB) 12 February 2004 (2004-02-12)<br>paragraph [0085] | 1-4, 11-12 |
| Y | JP 2003-238264 A (ISOLITE INSULATING PRODUCTS CO LTD) 27 August 2003 (2003-08-27)<br>paragraph [0010] | 1-4, 11-12 |
| Y | JP 2020-1973 A (KURARAY NORITAKE DENTAL INC) 09 January 2020 (2020-01-09)<br>examples | 1-12 |
| A | KR 10-2015-0072550 A (KOREA INSTITUTE OF CERAMIC ENGINEERING AND TECHNOLOGY) 30 June 2015 (2015-06-30) | 1-12 |

☐ Further documents are listed in the continuation of Box C.      ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **27 January 2023** | **14 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/046462** |

| Patent document<br>cited in search report | | | Publication date<br>(day/month/year) | Patent family member(s) | Publication date<br>(day/month/year) |
| --- | --- | --- | --- | --- | --- |
| WO | 2018/056331 | A1 | 29 March 2018 | US 2019/0231651 A1<br>claims, paragraphs [0072],<br>[0090], [0102], [0145]-[0146]<br>CN 109790047 A | |
| CN | 111704448 | A | 25 September 2020 | (Family: none) | |
| JP | 2004-504195 | A | 12 February 2004 | WO 2002/008478 A1<br>p. 22, lines 6-10<br>CN 1455820 A | |
| JP | 2003-238264 | A | 27 August 2003 | (Family: none) | |
| JP | 2020-1973 | A | 09 January 2020 | (Family: none) | |
| KR | 10-2015-0072550 | A | 30 June 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020001973 A
- JP 2019005627 A
- WO 2014126034 A